# EUROPEAN PATENT APPLICATION

(11) **EP 3 477 151 A1**
(43) Date of publication of application: **01.05.2019**
(21) Application number: 18201999.2
(22) Date of filing: 23.10.2018
(51) Int. Cl.: F16H 1/28, F16H 55/17

(54) **SYSTEM FOR COUPLING AT LEAST ONE RING GEAR OF A GEARBOX WITH A STATIC PART IN AN AIRCRAFT TURBO ENGINE**

(30) Priority: 24.10.2017 DE 102017219003
(71) Applicant: Rolls-Royce Deutschland Ltd & Co KG, 15827 Blankenfelde-Mahlow (DE)
(72) Inventor: GRUBBA, Tomasz, 15827 Blankenfelde-Mahlow (DE)
(74) Representative: Maikowski & Ninnemann Patentanwälte Partnerschaft mbB

(57) **Abstract**

The invention is related to a system for coupling at least one ring gear (1) of a gearbox (14) with at least one static part (3) of a geared turbofan engine (10) through a connector device (2), in particular a ring-like connector device (2), arranged radially between the at least one ring gear (1) and the at least one static part (3), with
two first torque link devices (31) coupling the ring gear (1) with the connector device (2), the two first torque link devices (31) being arranged between the ring gear (1) and the connector device (2), in particular opposite to each other on a first axis (A);
two second torque link devices (32) for coupling the connector device (2) to the at least one static part (3), the two second torque link devices (32) being arranged between the connector device (2) and the at least one static part (3), in particular opposite to each other on a second axis (B),

## Description

The invention relates to a system for coupling a at least one ring gear of a gearbox with a static part in a geared turbofan aircraft engine with the features of claim 1.

Geared turbofan engines for aircrafts comprise a gearbox which transforms the high rotational speed of a turbine section to a lower rotational speed of a propulsive fan in the turbofan engine. By allowing different rotational speeds between the turbine section and the propulsive fan, the overall efficiency of the aircraft engine is improved.

The gearbox has to handle considerable mechanical loads, in particular torque loads, so an effective mounting of the gearbox within the aircraft engine is required.

This issue is addressed by the system with the features of claim 1.

The system comprises a connector device arranged radially between the at least one ring gear and at least one static part in the aircraft engine. The connector device could also be termed as an intermediate device since it is functionally and structurally an intermediate element between the at least one ring gear and the static part in the aircraft engine. The at least one ring gear which is non-rotational has to absorb a large torque load which has to be transferred to the static part in the aircraft engine.

The system comprises two first torque link devices coupling the at least one ring gear with the connector device, the two first torque link devices being arranged between the at least one ring gear and the connector device, in particular opposite to each other on a first axis.

The system further comprises two second torque link devices for coupling the connector device to the at least one static part, the two second torque link devices being arranged between the connector device and the at least one static part, in particular opposite to each other on a second axis

In a further embodiment, the first axis and the second axis are perpendicular to each other.

Therefore, the first torque link devices and the second torque link devices are arranged in a cross-like manner around the rotational axis of the gearbox or aircraft engine. The connector device is positioned between the inner at least one ring gear and the at least one outer static part; hence the connector device is an intermediate element.

The torque is transmitted from the gearbox through the defined points at the torque link devices decoupling the torsional stiffness of the system from the lateral, vertical and / or axial stiffness of the system. A ring-like connector device provides considerable torsional stiffness.

In an embodiment the torque link devices each comprise a torque input part coupled to the at least one ring gear or the connector device and a torque output part coupled to the connector device or the at least one static part. The torque link devices are then so configured that an input torque applied tangentially from the at least one ring gear or the connector device on the input parts is transformable into a shear force within the torque link devices, the shear force being transformable into an output torque at the output part, the output torque acting tangentially to the connector device or the at least one static part. The torque link device absorbs the torque coming from the at least one ring gear or the connector device tangentially because in that direction the structures can take considerably high torque loads.

A further embodiment of the system comprises a tubular element positioned at the input part and / or a tubular element positioned at the output part. The tubular elements can be aligned with the tangential direction of the input torque and / or the output torque.

In another embodiment at least one of the torque link devices comprises two torque links which are pivotably connected to each other through a pivot element. The deformation due to the pivotable connection can provide defined structural flexibility. The pivotable connection can be e.g. realized by a nut and bolt connection. The tubular elements can be used to receive the nut and bolt connection.

In a further embodiment at least one of the torque link devices comprises one torque link which is pivotably connected to a structure of the system, in particular an adapter section or to at least one of the ring gears. Again, the pivotable connection can e.g. be realized by a nut and bolt connection.

When in one embodiment the input and output parts of at least one of the torque link device is offset relative to a rotational axis (e.g. offset by an angle and / or a distance) of the pivot element, the torque transfer can be effected e.g. in a radial direction.

In addition or alternatively is possible that at least one of the torque link devices comprise pivoting points, in particular through tubular elements and their axis, that are offset with respect to the central plane or axis going through the center between two ring gears.

Furthermore, in an embodiment at least one torque link is Y-shaped or fork-shaped, in particular comprising a tubular element at the basis and / or the prongs of the Y-shaped torque link or fork shaped torque link. The fork-shape can be considered as a Y-shape with more than two prongs. The basis of the Y-shaped or fork-shaped torque link could also be termed as stem, the prongs could be termed as arms.

Alternatively at least one torque link is Z-shaped, with the upper and lower part of the Z-shape comprising tubular elements, offset by a distance or at least one torque link is triangularly shaped, in particular in two parts the with tubular elements at a right angle. Depending on the mechanical loads, the shape of the torque links can be chosen. It is in particular possible that the two torque links of a torque link device have the same shape, e.g. two Y-shaped torque links coupled together. In the embodiment the tubular elements are configured to be coupled to another torque link, tangentially to the common flange of the at least one ring gear, tangentially to the connector device and / or tangentially to the at least one static part. In particular two Y-shaped torque links can be pivotably connected through the pivot element at the basis of one of the Y-shaped torque links.

Another embodiment comprises torque link devices with two torque links which are coupled anti-symmetrically.

In a further embodiment one torque link of the torque link devices and / or the torque link device are movable in an axial direction, as defined by the rotational axis of the geared turbofan engine.

It is also possible in one embodiment, that the at least one torque link is coupled to a spring and / or damper system. This provides additional adjustment for the lateral, vertical and / or torsional stiffness.

In a further embodiment the system comprises one ring gear, in particular with spur teeth or two ring gears, in particular with helical ring gears

The system can be connected to a gearbox in geared turbo fan aircraft engine.

Embodiments of the invention are shown in the figures, where
- Fig. 1: shows a schematic drawing of a geared turbofan engine according to the prior art;
- Fig. 2A: frontal view of an embodiment of a system for coupling a ring gear, or a pair of ring gears connected at a common flange interface, with a static part in a geared turbofan engine;
- Fig. 2B: a cross-sectional view of the embodiment shown in Fig. 2A;
- Fig. 2C: another cross-sectional view of the embodiment shown in Fig. 2A;
- Fig. 3A: a segment of the embodiment shown in Fig. 2A to show the locations and function of the torque link devices;
- Fig. 3B: a detailed view of an embodiment of a first torque link device between the ring gears and the connector device;
- Fig. 3C: a detailed view of an embodiment of the second toque link device between the connector device and the at least one static part;
- Fig. 4A: a frontal view of a further embodiment of a system for coupling a ring gear, or a pair of ring gears, with a static part in a geared turbofan engine;
- Fig. 4B: a perspective view of a section from the embodiment shown in Fig. 4A;
- Fig. 4C: a different perspective view of the section shown in Fig. 4B;
- Fig. 4D: a detail view of the second torque link device in the embodiment shown in Fig. 4A.
- Fig. 4E: a detail view of the first torque link device in the embodiment shown in Fig. 4A;
- Fig. 4F: a detailed view of a second torque link device (Fig. 4D) with a nut and bolt connection;
- Fig. 4G: a perspective view of the embodiment shown in Fig. 4F with two Y-shaped torque link elements;
- Fig. 4H: a perspective side view of the embodiment shown in Fig. 4G
- Fig. 5A: a perspective view of a further embodiment of a system for coupling a ring gear or a pair of ring gears with a static part in a geared turbofan engine;
- Fig. 5B: a frontal view of the embodiment shown in Fig. 5A;
- Fig. 5C: a detail of an embodiment of a first torque link device between a ring gear, or a pair of ring gears, and a connector device;
- Fig. 5D: a detail of an embodiment of a second torque link device between a connector device and a static part;
- Fig. 6A: a perspective view of the connection between an adapter section at a ring gear to a connector device;
- Fig. 6B: a perspective side view of the detail shown in Fig. 6A;
- Fig. 7A: a perspective view of an embodiment of a second torque link device with Z-shaped torque links;
- Fig. 7B: a different perspective view of the embodiment shown in Fig. 7A.

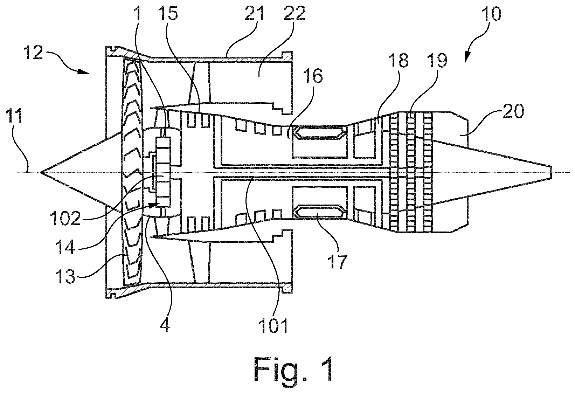

With reference to Fig. 1, a geared turbofan engine for an aircraft is generally indicated at 10, having a principal and rotational axis 11. The engine 10 comprises, in axial flow series, an air intake 12, a propulsive fan 13 (could be more than one stage), a gearbox 14, an intermediate pressure compressor 15, a high-pressure compressor 16, a combustion equipment 17, a high-pressure turbine 18, an intermediate-pressure turbine 19 and an exhaust nozzle 20. A fan casing 21 generally surrounds the engine 10 and defines the intake 12.

The geared turbofan engine 10 works in the conventional manner so that air entering the intake 12 is accelerated by the propulsive fan 13 to produce two air flows: a first air flow into the intermediate pressure compressor 15 and a second air flow which passes through a bypass duct 22 to provide propulsive thrust. The intermediate pressure compressor 15 compresses the air flow directed into it before delivering that air to the high pressure compressor 16 where further compression takes place.

The compressed air exhausted from the high-pressure compressor 16 is directed into the combustion equipment 17 where it is mixed with fuel and the mixture is combusted. The resultant hot combustion products then expand through, and thereby drive the high pressure turbine 18 and intermediate pressure turbine 19 (i.e. turbine sections) before being exhausted through the nozzle 20 to provide additional propulsive thrust. The high pressure turbine 18 and the intermediate pressure turbine 19, respectively, drive the high pressure compressor 16 and the intermediate pressure compressor 15, each by suitable interconnecting shaft assembly.

An intermediate pressure shaft 101 also drives the propulsive fan 13 via the gearbox 14. The gearbox 14 is a reduction gearbox in that it gears down the rate of rotation of the propulsive fan 13 by comparison with the intermediate pressure compressor 15 and intermediate pressure turbine 19.

The gearbox 14 is an epicyclic planetary gearbox having a static gearing gear 1 (e.g. here two parallel ring gears), rotating and orbiting planet gears (not shown here) supported by a planet carrier (also not shown here) and a rotating sun gear 102. In the embodiment shown the output of the gearbox 14 is through the carrier. In principle other gearbox 14 designs can be used.

The embodiment shown in Fig. 1 has a specific shaft arrangement which is understood not to be limiting. The embodiments described in the following can also work with a 2- or 3-shaft arrangement.

In Fig. 1 the coupling of the at least one ring gear 1 within a front casing 4 of the geared turbofan engine 10 is only shown schematically.

In the following some embodiments for such a coupling (e.g. a mounting or a connection) of the gearbox 14 within the aircraft engine 10 are described in an exemplary, non-limiting way.

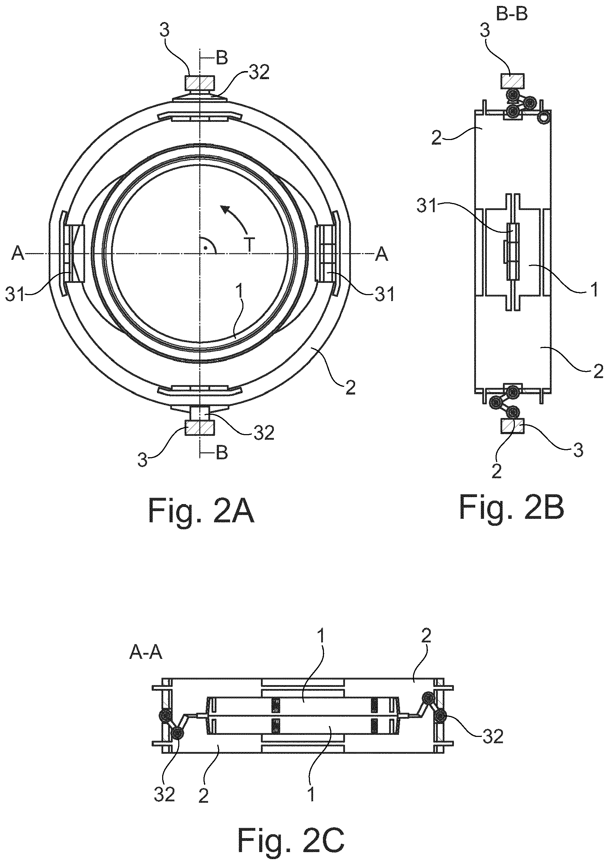

In Fig. 2A to 2C an embodiment of a coupling between at least one ring gear 1 and a static part 3, e.g. connected to the front casing 4 of the aircraft engine 10, is shown.

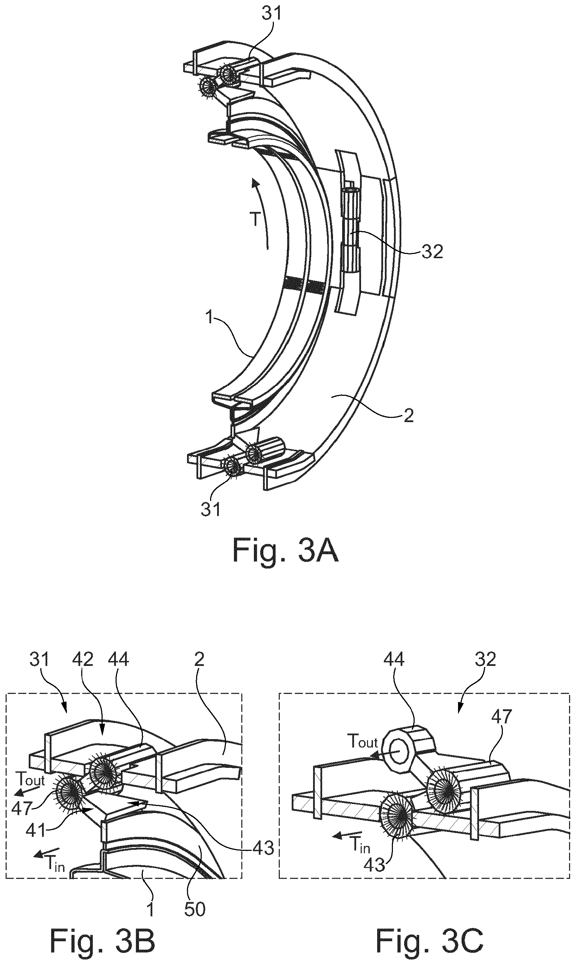

In Fig. 2A a frontal view of the at least one ring gear 1, i.e. in axial direction of the turbofan engine 10 is shown. In the embodiment shown the two ring gears 1 (seen e.g. in Fig. 3A) with mutually opposite helical gears are used bolted together at their common flange; thus the axial mesh force components cancel out at the helical gears.

The other parts of the gearbox 14 and the nut 52 and bolt 51 connection are not shown for sake of simplicity in this figure.

It is assumed that a torque T operates in counter-clockwise direction on the static (i.e. nonrotating) the at least one ring gear1. This torque T is transmitted via first torque link devices 31 to a connector device 2 which is a ring-like structure surrounding the ring gears 1 radially outward from the ring gears 1. As will be described in connection with Fig. 2B and 2C, the connector device 2 has an essentially ring-like form but not necessarily a perfect circular cross-section.

From the connector device 2 the torque T is transmitted via second torque link device 32 to static parts 3 which are only shown schematically in Fig. 2A.

The torque links devices 31, 32 comprise torque links which will be described in detail below.

The first torque link devices 31 are spaced apart by 180° between the ring gears 1 and the connector device 2, i.e. the first torque link devices 31 are arranged opposite to each other on a first axis A.

The second torque link devices 32 are also spaced apart by 180° but are positioned between the connector device 2 and the static parts 3, i.e. the second torque link devices 32 are arranged opposite to each other on a second axis B.

The first and second axis A, B, defining the relative positions of the torque link devices 31, 32 are perpendicular to each other.

In other embodiments, not shown here, the torque device links 31, 32 can be positioned around the ring gears 1 and / or the connector device 2 not exactly opposite so that the axis A, B would not be perpendicular.

In effect the connector device 2 together with the mutually perpendicularly arranged torque link devices 31, 32 forms a kind of intermediate or floating ring coupling for the ring gears 1 with static parts 3 within the geared turbofan engine 10.

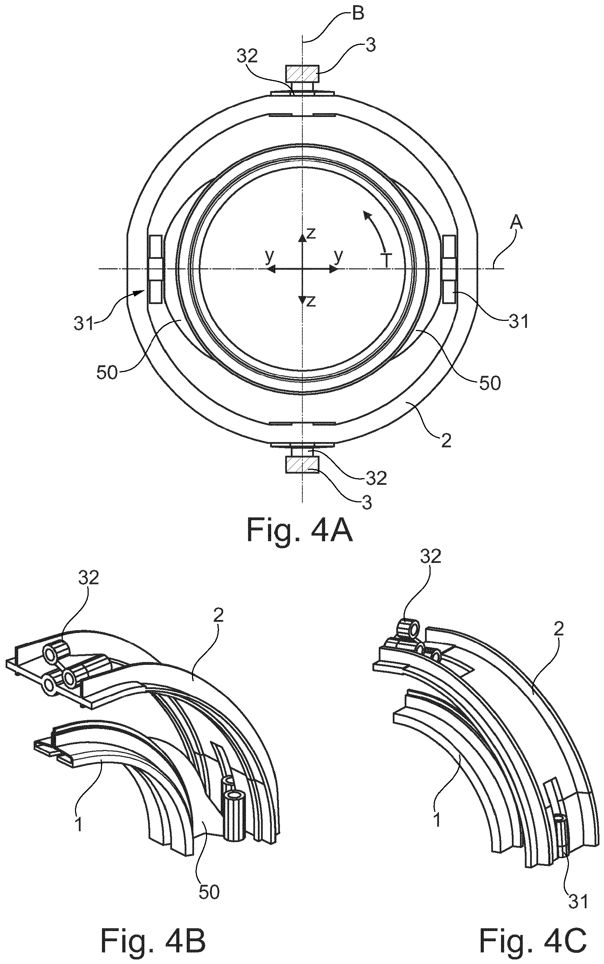

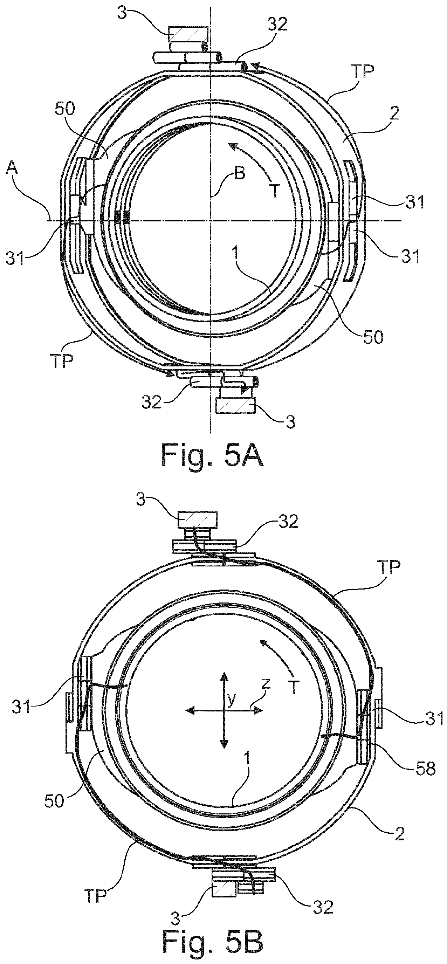

This forms a coupling system which allows a stiff resistance against torsion T and relative high flexibility in the axial and lateral direction (see e.g. Fig. 4A, 5B). Each pair of torque link devices 31, 32 may have their pivoting points or offset either symmetrically or asymmetrically arranged with respect to the center point (see the center point as an intersection of axes A and B in Fig 2A). The asymmetrical arrangement (see e.g. Fig. 2C) of the torque link devices 31, 32 allows for cancelling out additional bending moments, thus improving resistance to buckling.

Fig. 2B and 2C show cross-sectional views of the embodiment of the system according to Fig. 2A. Here the torque link devices 31, 32 each comprising two torque links 41, 42 are shown in an overview. The function of embodiments of the torque links 41, 42 will be discussed below.

In Fig. 3A ring gears 1 (i.e. two ring gears in parallel) and the connector device 2 are shown in a perspective sectional view along axis A.

At the top and on the bottom, the first torque link devices 31 are shown, coupling the ring gears 1 with connector device 2. This first torque link device 31 is shown in detail in Fig. 3B.

At the right hand side of Fig. 3A one second torque link device 32 is shown, coupling the connector device 2 with the static part 3 (not shown). This second torque link device 32 is shown in detail in Fig. 3C.

In Fig. 3A the torque T acting on the ring gears 1 is shown. The torque T is applied as mesh force components (radial, tangential and axial) at a number of discrete locations.

The first torque link device 31 each comprise to two torque links 41, 42, best seen in Fig. 3B. The two torque link 41, 42 form a hinged structure, i.e. both torque links 41, 42 are pivotably movable around a pivot element 47. Both torque links 41, 42 are assembled in an anti-symmetric way.

The first torque link devices 31 (see Fig. 3B) have a torque input part 43 connected to the ring gears 1 and a torque output part 44 connected to the connector device 2. The torque input part 43 (connected to the ring gears 1 through a flange (adapter section 50)) takes an input torque Tᵢₙ tangentially from the ring gears 1. This is transformed through a deformation of the pivotably connected torque links 41, 42 into a shear force. The shear force is then transformed into an output torque Tₒᵤₜ at the output part 44. The output torque Tₒᵤₜ is tangential to the connector device 2 and has the same rotation direction as the input torque Tᵢₙ.

The flange (adapter section 50) can be distributed over an angle less than 360° around the ring gears 1 or it can be designed circumferentially all over 360° as the ring gears 1 themselves.

In Fig. 3B, the bottom torque link 41 has only one tubular element, namely at the pivoting point. However, another embodiment could be that the torque link 41 had two tubular elements 48, 49 at each end. As will be shown below, the tubular elements 48, 49 can receive a bolt 52 and nut 51 connection for connection the torque link 41, 42 to a ring gear 1 or the static part 3.

The second torque link devices 32 (see Fig. 3C) are built in an analog way. They have a torque input part 43 connected to the connector device 2 and a torque output part 44 connected to the static parts 3 (not shown here). The torque input part 43 takes the input torque Tᵢₙ tangentially from the connector device. This is transformed through a deformation of the pivotably connected torque links 41, 42 into a shear force. The shear force is then transformed into an output torque Tₒᵤₜ at the output part 44. The output torque Tₒᵤₜ is tangential to the static part 3 and has the same rotation direction as the input torque Tᵢₙ.

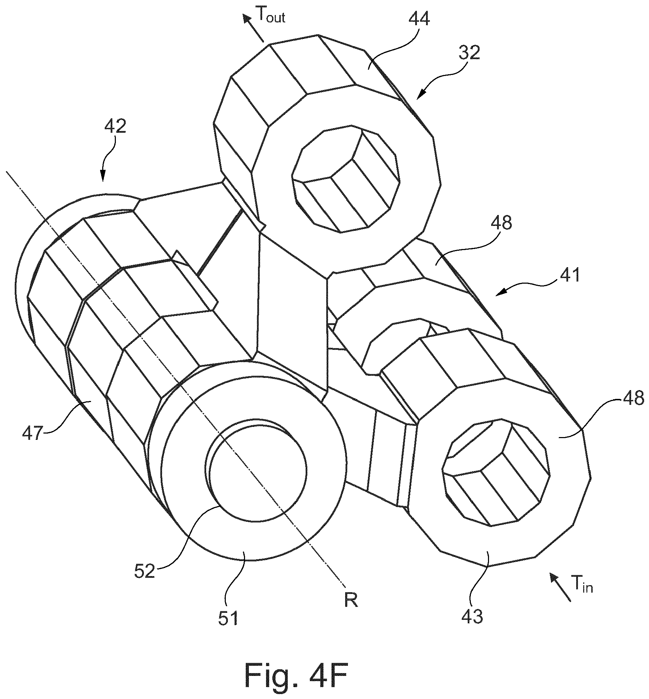

The tubular elements 48, 49 shown in Fig. 3A, B, C and in the following figures can be linked together pivotably through nut 52 and bolt 51 connections as e.g. shown in Fig. 4F. In most figures the nut 52 and bolt 51 connection is not shown for the sake of simplicity.

In Fig. 4A to 4G a further embodiment is shown. Reference can be made to the description of the embodiments shown above.

In Fig. 4A a frontal view shows the ring gears 1 coupled to the connector device 2 through the first torque link devices 31 being opposite to each other on the first axis A. Similarly to embodiments described above, there can be just one ring gear (for example, in case of spur gears), or two helical ring gears 1, thus, cancelling out the axial mesh forces at each gear.

The connector device 2 is coupled to the static parts 3 at the top and at the bottom through the second torque link devices 32 being opposite to each other on the second axis B. First and second axes A, B are perpendicular to each other.

At the outer surface of the ring gear 1 an adapter section 50 is positioned, strengthening the ring gear 1 against the high torque loads in this region. The torque T is applied to the ring gear in a counter-clockwise direction. The adapter section 50 is symmetrical to the first axis A and the second axis B.

This adapter section 50 can be thought of as part of the common flange between two ring gears 1. In the embodiment considered, the ring gears 1 comprise two helical ring gears which are connected using a common interface, which is the common flange. This is why we may have that common flange extended circumferentially 360°; or, we could have the ring gears bolted together 360°, and the adapter was distributed at a given angle, symmetrically or unsymmetrically with respect to the torque link device position 31 shown in Fig. 4A.

As in the other embodiments, the connector device 2 together with the mutually perpendicularly arranged torque link devices 31, 32 forms a kind of intermediate or floating ring, coupling the ring gears 1 with at least one static part 3 within the geared turbofan engine 10.

The ring-like structure of the connector device 2 provides a high torque resistance. The torque T is transmitted at discrete and perpendicular locations. The complete system has a considerable flexibility (i.e. relatively low stiffness) in the lateral directions indicated by the arrows in the Y- and Z-directions.

Fig. 4B and 4C show details of the first toque link device 31 and the second torque link device 32 in connection with the ring gears 1 and the connector device 2.

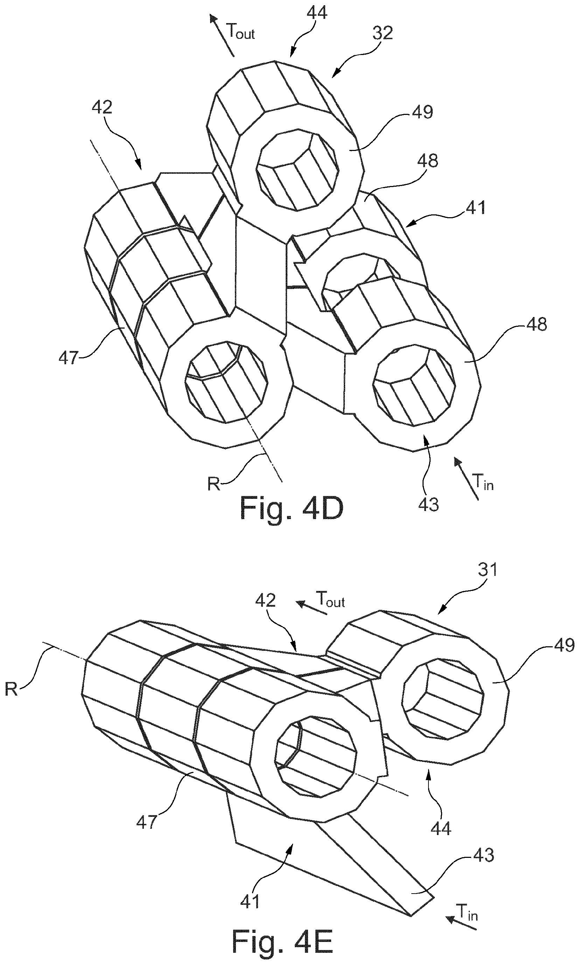

Fig. 4D and 4E show the torque link devices 31, 32 in more detail. The torque link device 32 (see Fig. 4A) is connected to the static structure 3 such that the torque link 44 may only rotate with respect to the central axis of the upper tubular section (see Fig. 4D). The other degrees (all translations and the other two rotations) are constrained 44. This can be realized by a bolted connection 51, 52 of the torque link 44 to another hinge-like component, the latter being part of the static structure 3. For the sake of simplicity only one nut 52 and bolt 51 connection in the second torque link 42 is shown in Fig. 4F.

The only allowed rotation of any torque link 41, 42 with respect to another mating torque link 41, 42 at their common spot face interface is affected by some amount of friction. Therefore, stiffness of the whole system in both lateral and axial direction depends on that friction. The adverse influence of friction can be mitigated by a proper higher offset of the pivoting point of the torque link device.

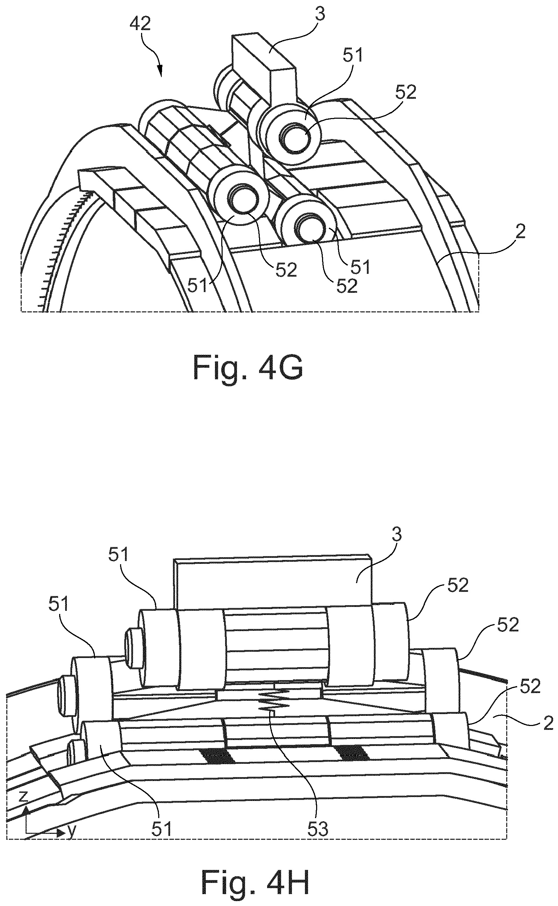

The amount of lateral flexibility introduced with this design means there is a need to effectively support the weight of its members in order not to exert unwanted parasitic loads on to the other gears, like planets and sun. Therefore it may be assumed that some spring elements 53 (see Fig. 4H) are used to support the assembly hanging weight at the at least one static part 3. The spring elements 53 and dampers may be used at any given torque link devices 31, 32, as is shown in the embodiments of Fig. 4G and 4H

In Fig. 4D the second torque link device 32, comprising two torque links 41, 42. The two torque links 41, 42 have the same shape, i.e. they are essentially Y-shaped with a base and two prongs. At the respective ends of the torque links 41, 42, tubular elements 48, 49 are positioned.

The first torque link 41 has an input part 43 which is coupled to the connector device 2 (not shown here) with two tubular elements 48 at the input part 43. The input torque Tᵢₙ is transmitted in the axial direction of the two tubular elements 48 on the input part 43. The input torque Tᵢₙ causes a shear force in the torque link device 32.

The base of the Y-shaped first torque link 41 forms the pivot element 47 pivotably linked with the second torque link 42.

The pivot element 47 comprises a tubular element fitting between the two tubular elements at the two prongs of the Y-shaped second torque link 42. Opposite the two prongs the one tubular element 49 forms the output part 44 of the torque link device 32. There the output torque Tₒᵤₜ is here transmitted to the static part 3 (not shown here).

In Fig. 4E the first torque link device 31 coupling the ring gear 1 with the connector device 2 is shown.

The first torque link 41 comprises a beam-like input part 43 coupled to the ring gears 1 using a common flange. At the other end of the beam-like input part 43, a tubular element forms the pivot element 47. The pivot element 47 is positioned between the prongs of the Y-shaped second torque link 42. At the other end a tubular element 49 forms the output part 44 of the first torque link device 31.

The input torque Tᵢₙ is transmitted tangentially from the ring gears 1 into the beam-like input part 43. The output torque Tₒᵤₜ transmitted tangentially from the output part 44 into the connector device 2.

In both torque link devices 31, 32 (see Fig. 4D, 4E), the input parts 43 and the output parts 44 are axially offset relative to a pivot axis R of the pivot element 47. The torque T goes through the pivot element 47 and is thereby transferred radially outwards but the rotational direction of the torque T is not changed. In the embodiment shown in Fig. 4D the input part 43 of the first torque link 41 and the output part 44 of the second torque link 42 are spaced apart by a certain angle (i.e. an angular offset relative to the axis R).

The embodiment of the first torque link device 32 shown in Fig. 4E the offset of the input part 43 and the output part 44 relative to the axis R is also angular offset.

In the system (see Fig. 4B, 4C) the torque is transmitted from the lower input part 43 to the radially further outward output part 44.

In Fig. 4G and 4H some more design context for the torque links 41, 42 is shown. Also the bolt 52 and nut 51 connection and the connection of the second torque link device 42 to the static part 3 and the connections to the connector device 2 are shown. The second torque link device 42, which is connected to the static part 3, is linked through a spring element 53 to the ring gears 1 (only shown in Fig. 4H). The spring element 53 may provide some additional flexibility and/or support.

In the embodiment shown in Fig. 4A to 4G the torque links 41, 42 were Y-shaped. Alternatively, it is possible to have at least one of the torque links 41, 42 with for fork-shape, i.e. one basis - like in the Y-shape - but fewer or more than two prongs. Depending on the mechanical loads on the system the shapes can be chosen appropriately. For example in connection with Fig. 5A, B, C, D, 6A, B, 7A, B a Z-shaped torque link 41, 42 is shown.

In Fig. 5A to 5C a further embodiment of a system is shown. In the perspective view of Fig. 5A the torque link devices 31, 32 have the same functions as in the previously described embodiments.

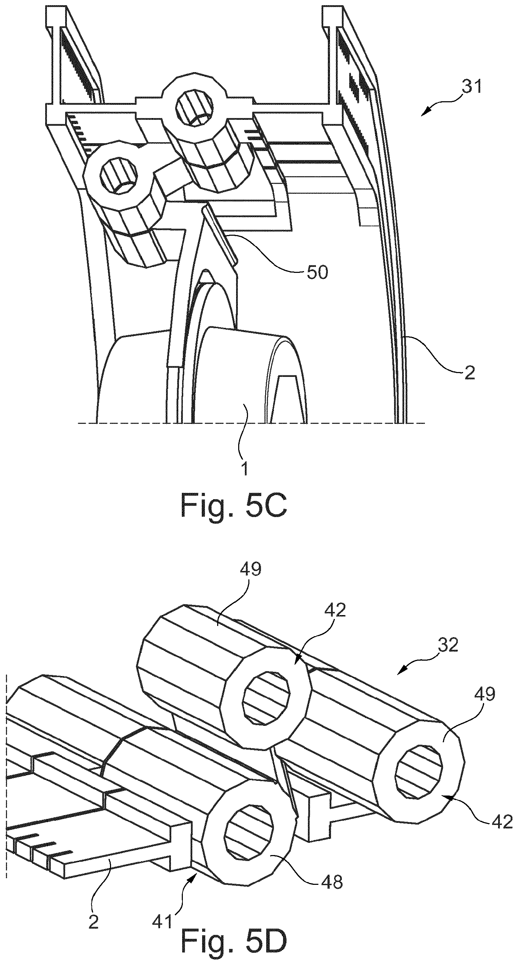

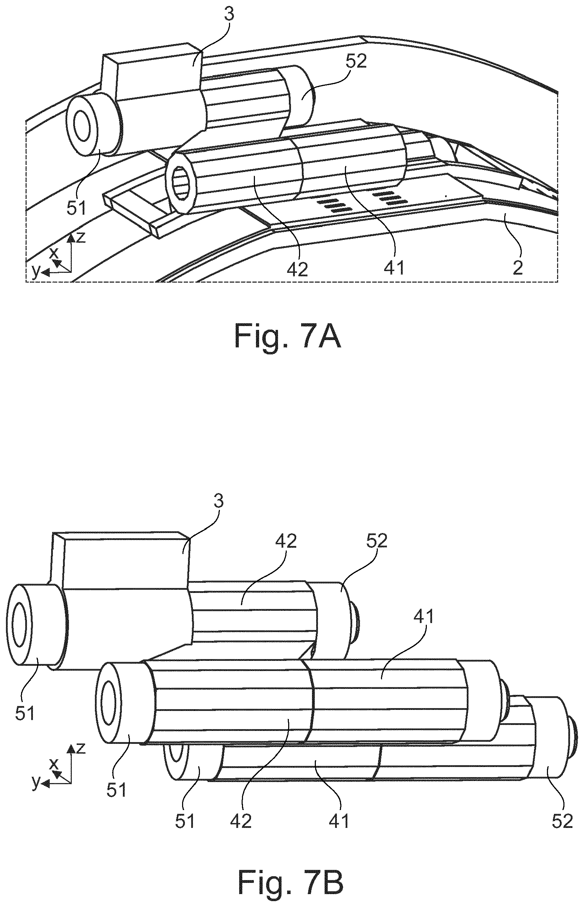

In these embodiments the Z-shaped torque links 41, 42 forming the torque link devices 31, 32 comprise pivoting points, with tubular elements 48, 49 with their respective axis offset with respect to the central plane going through the center between two ring gears 1. In Fig. 5D the first torque link element 41 has a first tubular element 48 in the front and a second tubular element 48 offset to the rear (not fully visible). The second torque link element 42 has a first tubular element 49 in the front, the second tubular element 49 offset to the rear. Both toque link elements 41, 42 are interlinked using a nut 52 and bolt connection 52 (not shown here). In Fig. 7A, 7B a further embodiment of a torque link device 32 with Z-shaped torque links 41, 42 is shown.

The torque T has a counter-clockwise direction as indicated by the arrow. The first torque link devices 31 on the first axis A couple the ring gears 1 with the connector device 2, the second torque link devices 32 on the second axis B couple the connector device 2 with the static parts 3. The first and second axes A, B are positioned perpendicular to each other.

As in the other embodiments, the lateral stiffness (directions Y and Z in Fig. 5B) is relaxed, whereas the complete system provides considerable torque resistance. In Fig. 5B the torque paths TP from the ring gears 1 to the static parts 3, via the first torque link devices 31, via the connector device 2 and via the second torque link devices 32 is shown.

One difference to the embodiment shown in Fig. 4A to 4E is the form of the adapter section 50 at the outer surface of the ring gears 1, strengthening the ring gears 1 against the high torque loads in this region. The torque T is applied to the ring gears 1 in a counter-clockwise direction. Here the adapter section 50 has a larger cross-section in the region facing the torque T.

Fig. 5C shows a detail of a first torque link device 31 in a perspective view. The adapter section 50 is connected to the ring gears 1. In a variation to the embodiment shown in Fig. 5C, the adapter section 50 could comprises two tubular elements 48, 49 such as in the torque link devices 31, 32 shown e.g. in Fig. 4D or 4E. They would be pivotally connected to the ring gears 1 at their common flange 50.

Fig. 5D shows a detailed view of the second torque link device 32.

In general, each pair of tubular elements 48, 49 in the embodiments described above can be connected using bolts 51 and nuts 52, or any other fasteners similar in function. The torque link devices 31, 32 are designed such that the primary torque load gets transferred through the contact between each pair of tubular elements 48, 49 at their common contact interface. In such circumstances, the fasteners are principally unloaded axially as a result of the main torque transmission load. When the torque acts in the opposite direction, the bolts get into tension, and they can be used as fuses to limit the amount of that reversed torque.

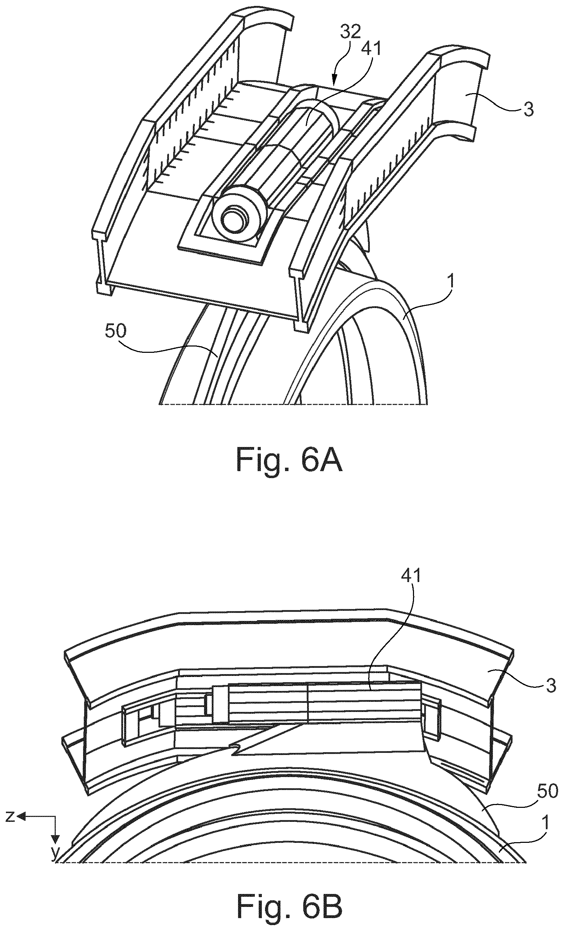

In Fig. 6A, 6B details of an embodiment of a second torque link device 32 coupling the ring gears 1 with a static part 3 are shown. This embodiment is a variation of the embodiments shown in Fig. 5A to 5D.

The second torque link device 32 comprises only one torque link 41 which is connected to the adapter section 50 (i.e. a flange at the ring gears 1) and the static part 3 with nuts 52 and bolt 51 connections.

In Fig. 7A, 7B an embodiment of a second torque link device 32 coupling the ring gears 1 with the connector device 2 are shown. For the sake of simplicity only one bolt 52 and nut 51 connection is shown in Fig. 7A.

The torque links 41, 42 are Z-shaped. Both Fig. 7A, 7B show the offset of the tubular elements 48, 49 of the torque links 41, 42 which receive the nut 52 and bolt 51 connection.

In general, the lateral and axial stiffness depend on the amount of friction, and also an offset of the torque link devices; the greater the offset, the more flexibility the system has. In other words, it is easier to overcome friction at rotation of a torque link with respect mating one if the pin offset is higher.

In general, the maximum axial stiffness of 3100 N/mm and the maximum lateral stiffness of 5500 N/mm can be easily not exceeded (flexibility) using this system. Therefore, it can accommodate easily axial and radial offset without exerting high loads at the ring gear teeth. On top of those two stiffness, it provides high flexural flexibility due to bending moment.

The embodiment of the system can provide significant flexibility regardless of the direction of the lateral enforcement. It is very flexible at lateral enforcement no matter whether an offset occurs at one given angle or at completely another one. In other words, the ring gears can be displaced in Y-direction, while still applying high torque values, and also in the perpendicular Z-direction. Although, we may use different forces, thus the flexibility may be different in different directions.

### List of reference numbers

- 1: ring gear
- 2: connector device
- 3: static part
- 4: front casing of geared turbofan engine

- 10: geared turbofan engine
- 11: principal rotational axis
- 12: air intake
- 13: propulsive fan
- 14: gearbox, power gearbox
- 15: intermediate pressure compressor
- 16: high-pressure compressor
- 17: combustion equipment
- 18: high-pressure turbine
- 19: intermediate-pressure turbine
- 20: exhaust nozzle
- 21: fan casing
- 22: by-pass duct

- 31: first torque link device
- 32: second torque link device

- 41: first torque link
- 42: second torque link
- 43: input part
- 44: output part
- 47: pivot element
- 48: tubular element, particular at input part
- 49: tubular element, particular at output part
- 50: adapter section, flange
- 51: nut
- 52: bolt
- 53: spring

- 101: intermediate pressure shaft
- 102: sun gear

- A: axis for torque links of the first torque link device
- B: axis for torque links of the second torque link device

- R: rotational axis of pivot element

- T: torque

## Claims

1. System for coupling at least one ring gear (1) of a gearbox (14) with at least one static part (3) of a geared turbofan engine (10) through a connector device (2), in particular a ring-like connector device (2), arranged radially between the at least one ring gear (1) and the at least one static part (3), with
two first torque link devices (31) coupling the ring gear (1) with the connector device (2), the two first torque link devices (31) being arranged between the ring gear (1) and the connector device (2), in particular opposite to each other on a first axis (A);
two second torque link devices (32) for coupling the connector device (2) to the at least one static part (3), the two second torque link devices (32) being arranged between the connector device (2) and the at least one static part (3), in particular opposite to each other on a second axis (B),

2. System according to claim 1, wherein the first axis (A) and the second axis (B) being perpendicular to each other.

3. System according to claim 1 or 2, wherein torque link devices (31, 32) each comprise
a torque input part (43) coupled to the ring gear (1) or the connector device (2) and
a torque output part (44) coupled to the connector device (2) or the at least one static part (3),
the torque link devices (31, 32) configured so that an input torque (Tᵢₙ) applied tangentially from the at least one ring gear (1) or the connector device (2) on the input part (43) is transformable into a shear force within the torque link devices (31, 32), the shear force being transformable into a output torque (Tₒᵤₜ) at the output part (44), the output torque (Tₒᵤₜ) acting tangentially to the connector device (2) or the at least one static part (3).

4. System according to claims 3, wherein a tubular element (48) is positioned at the input part (43) and / or a tubular element (49) is positioned at the output part (44).

5. System according to claim 3 or 4, wherein at least one of the torque link devices (31, 32) comprises two torque links (41, 42) which are pivotably connected to each other through a pivot element (47).

6. System according to claim 3 or 4, wherein at least one of the torque link devices (31, 32) comprises one torque link (41) which is pivotably connected a structure of the system, in particular an adapter section (50) or to at least one of the ring gears (1).

7. System according to at least one of the claims 3 to 6, wherein the input and output parts (43, 44) of at least one of the torque link devices (43, 44) is offset relative to a rotational axis (R) of the pivot element (47).

8. System according to at least one of the claims 6 to 8, wherein at least one of the torque link devices (31, 32) comprises a pivoting point, in particular through tubular elements and their axis, that is offset with respect to the central plane or axis going through the center between the two ring gears (1).

9. System according to at least one of the claims 2 to 8 wherein at least one torque link (41, 42) is Y-shaped or fork-shaped, in particular comprising a tubular element (48, 49) at the basis and / or the prongs of the Y-shaped torque link (41, 42) or fork shaped torque link, the tubular elements (48, 49) configured to be coupled to another torque link (42, 41), tangentially to the at least one ring gear (1), tangentially to the connector device (2) and / or tangentially to the at least one static part (3), in particular where in two Y-shaped torque links (41, 42) are pivotably connected through the pivot element (47) at the basis of one of the torque links (41, 42).

10. System according to at least one of the claims 3 to 9, wherein at least one torque link (41, 42) is Z-shaped, with the upper and lower part of the Z-shape comprising tubular elements (48, 49) offset by a distance or at least one torque link (41, 42) is triangularly shaped, in particular two parts with tubular elements (41, 42) at a right angle.

11. System according to at least one of the claims 3 to 10, wherein the torque link device (31, 32) comprises two torque links (41, 42) which are coupled anti-symmetrically.

12. System according to at least one of the claims 3 to 11, wherein the at least one torque link (41, 42) of the torque link device (31, 32) and / or the torque link device (31, 32) are movable in an axial direction, as defined by the rotational axis (11) of the geared turbofan engine (10).

13. System according to at least one of the preceding claims, wherein the at least one torque link (41, 42) is coupled to a spring and / or damper system.

14. System according to at least one of the preceding claims, comprising one ring gear (1), in particular with spur teeth or two ring gears (1), in particular with helical ring gears.

15. System according to at least one of the preceding claims connected to a gearbox (14) in geared turbo fan aircraft engine.
